# EUROPEAN PATENT SPECIFICATION

(11) **EP 0 645 002 B1**
(45) Date of publication and mention of the grant of the patent: **02.04.1997**
(21) Application number: 92914472.3
(22) Date of filing: 11.06.1992
(51) Int. Cl.: G01J 5/20

(54) **THERMAL ISOLATION MICROSTRUCTURE**
WÄRMEISOLIERUNGS-MIKROSTRUKTUR
MICROSTRUCTURE D'ISOLATION THERMIQUE

(43) Date of publication of application: 29.03.1995
(73) Proprietor: HONEYWELL INC., Minneapolis Minnesota 55408 (US)
(72) Inventor: HOCKER, G., Benjamin, Minnetonka, MN 55345 (US); HOLMEN, James, O., Minnetonka, MN 55343 (US); JOHNSON, Robert, G., Minnetonka, MN 55343 (US)
(74) Representative: Fox-Male, Nicholas Vincent Humbert
(86) International application number: US9205010
(87) International publication number: WO9325878

(56) References cited:
- EP-A- 0 453 372
- WO-A-91/16607

## Description

The US Government has certain rights in this invention pursuant to the terms of a Contract DAAL01-85-C-0153.

The invention relates to the field of microstructure infrared radiation detector elements. Good thermal isolation of infrared radiation detector elements is required to maximise performance. The thermal isolation provided by the long detector support legs is presently limited because the relatively long legs must be thick enough to not break during turbulent liquid anisotropic etch of the pit in the silicon substrate beneath the detector, as well as thick enough to maintain the detector suspended out of contact with the substrate during and after the anisotropic etch.

The present invention provides a process for fabricating a thermal isolation microbridge used as an infrared radiation detection element, the steps comprising: providing a monocrystalline silicon substrate wafer having a planar surface; depositing a thin film silicon nitride layer on said surface; depositing and delineating a thin film layer of temperature-sensitive, electrically-resistive material for a sensor and electrode leadout on said silicon nitride layer; depositing a further thin film silicon nitride layer over said material and said first silicon nitride layer; depositing a thin absorber layer over the last deposited silicon nitride in the area of the sensor; depositing and delineating a thin film photo-lithographic mask; making a plurality of silicon nitride cuts outlining elongated legs containing the electrode leadout and the support tabs for the microbridge; dry etching the legs and the support tabs to remove about 1/2 the thickness of silicon nitride; introducing anisotropic etchant through said cuts and anisotropically etching away silicon to form a pit beneath the microbridge sensor legs; removing the thin film photolithographic mask with a liquid etch; etching with a plasma dry etch the exposed silicon nitride on said elongated legs to remove the Si₃N₄ of the leg extending laterally of the electrode so as to remove the support tabs.

Figure 1 shows a plan view of the microbridge infrared radiation detector element according to the invention.

Figure 1a shows a cross section of the completed support leg for the microbridge element.

Figure 2 shows an edge view of the structure Figure 1.

Figure 3 shows the plan view at an intermediate point in the process before tab removal, and before the support legs are made narrower and thinner by the final dry etch. Metal lines are not shown.

Figure 3a shows a cross section of the support leg prior to the thinning steps.

Figure 4a and 4b are cross section of the support leg prior to the thinning steps.

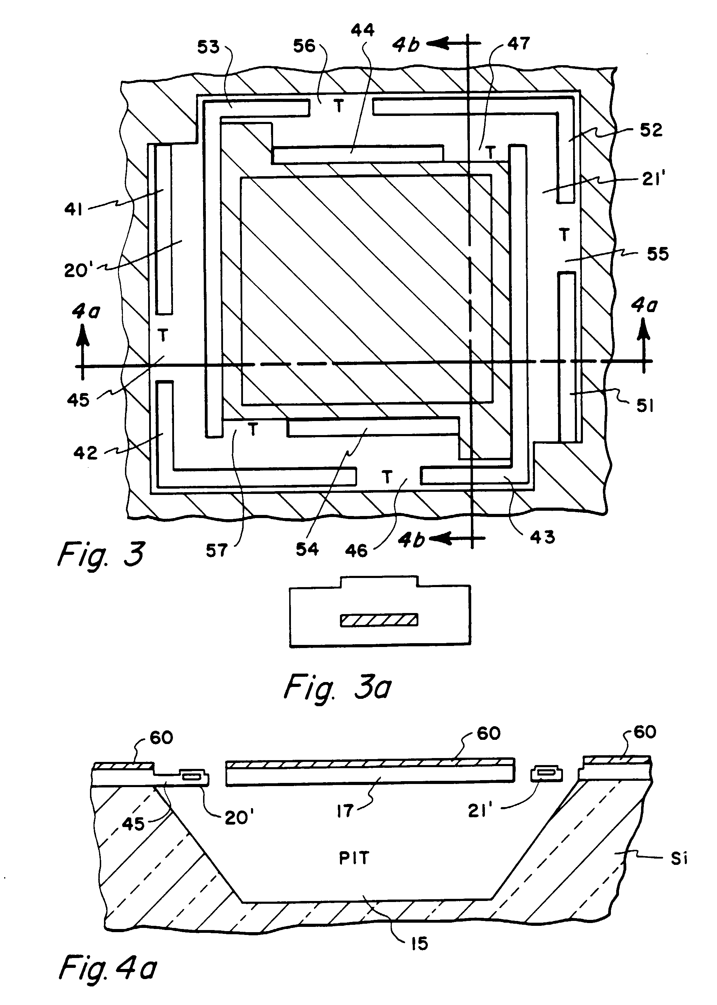

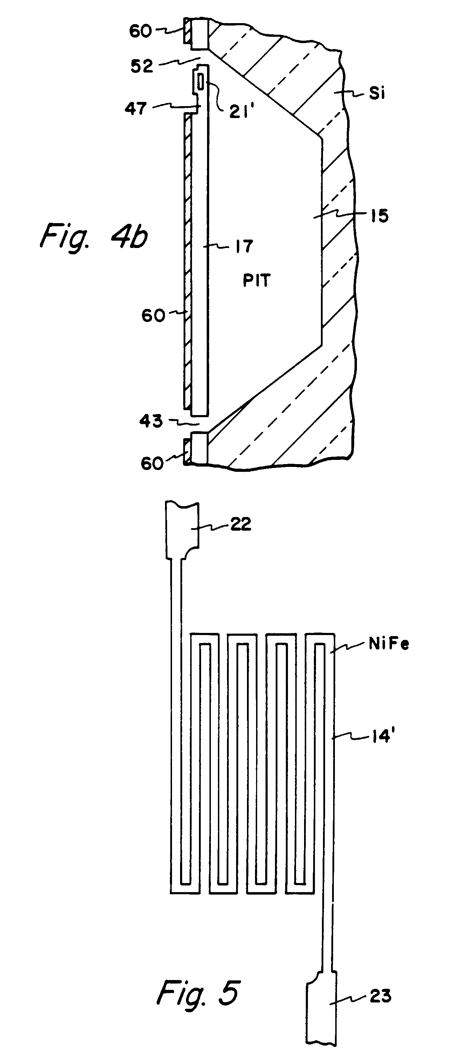

Figures 4a and 4b are cross section views of Figure 3.

Figure 5 shows and exemplary sensing element embedded in the microbridge.

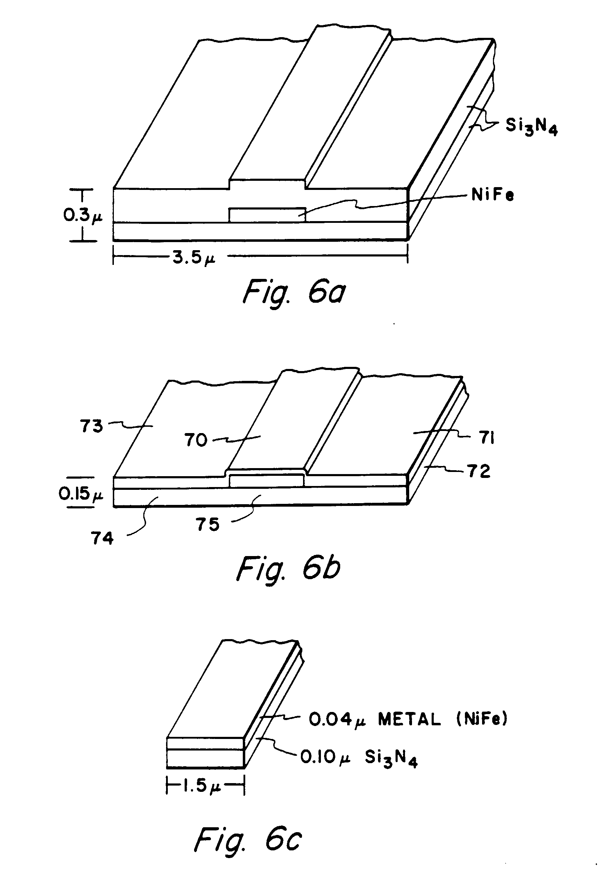

Figures 6a, b, and c show successive steps in the process of fabricating the support legs.

Broadly stated, in the construction of a microbridge sensor device 10 a single crystalline (100) silicon substrate 11 has grown on the surface thereof a thin film layer of dielectric 12, 13 such as silicon nitride (Si₃N₄). Generally speaking, a thin film resistive radiation sensing element 14 is embedded in the silicon nitride, a thin film IR absorber layer 16 is over the dielectric; a pit 15 is etched out of the silicon beneath the sensing element, and the silicon nitride 12, 13 with sensing element 14 and absorber 16 is a thermally isolated bridge 17 over the etched pit in silicon substrate. The microbridge 17 is supported by two long thin support legs 20 and 21.

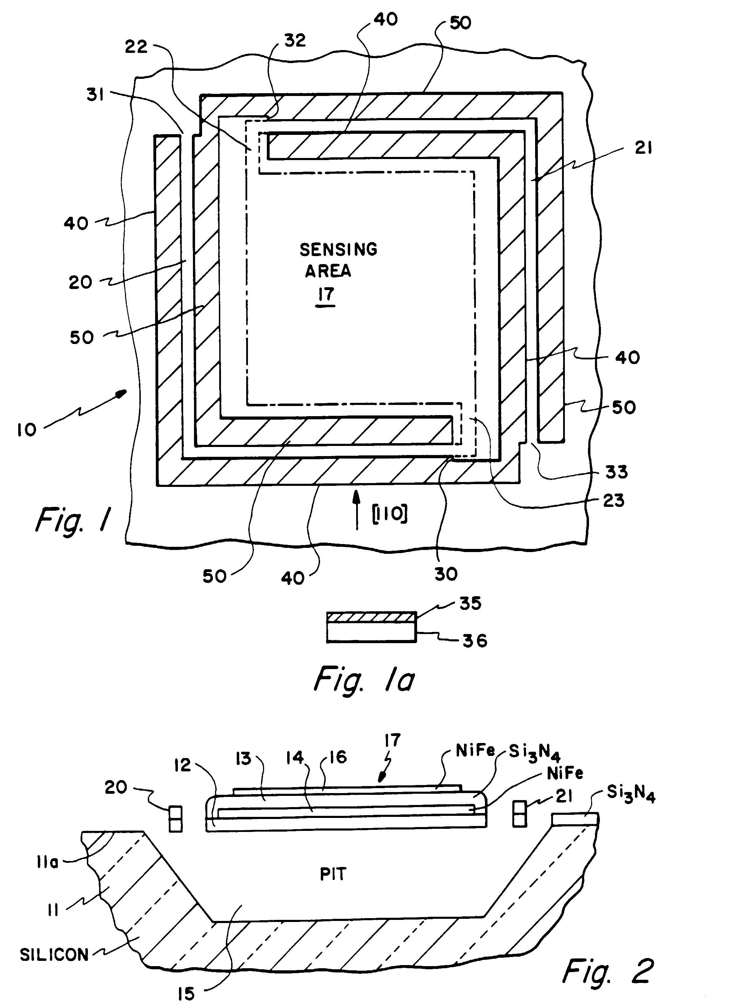

The objective of the invention is to decrease the thermal conductance of the detector support leg by fabricating a leg having a cross section shown in Figure la which contrasts to the earlier designed cross section shown in Figure 3a. The thermal conductance of the Figure 1a leg is due to the conductance of the metal electrode combined with that of the nitride. The conductance can be one half or less that of the conductance of the leg shown in Figure 3a, depending on the electrode metal that is used. A conventional metal is 80Ni;20Fe alloy. Other conductive metals could be used.

The leg of Figure 1a is too weak to withstand the turbulent etch process during which liquid forces on the detector could break such thin support legs. This difficulty can be avoided by designing the support legs with connecting tabs as shown in Figure 3. The legs and their support tabs are then thinned to about 1/2 thickness before the liquid anisotropic etch. The main detector area is protected during this step by a chrome metal mask which extends a few microns beyond the absorber layer and the pit side wall as shown in Figure 3. During the anisotropic etch, the tabs also prevent the collapse of the detector into the etch pit. This potential collapse into the pit would occur because of surface tension effects. After the anisotropic etch, the chrome mask is removed by a final liquid etch. A final plasma "dry" etch then thins the legs and removes the support tabs by removing the last approximately 1.5×10⁻⁷m (1500 angstroms) of nitride, leaving the leg cross section of Figure 1a.

During the last plasma dry etch, the absorber layer over the main detector acts as an etch stop. When completed, a length of metal electrode a few µm long in the leg will still be encased in nitride at each end of the leg a a precaution against electrical leakage and shorting to the absorber layer 16 or the silicon substrate. When the last plasma dry etch is finished, the tabs will have been eliminated, and the long narrow electrode/nitride bimorph will tend to bend upward to raise the main detector 17 safely above the substrate, that is, to give a positive elevation of the detector above the substrate to prevent thermal shorting.

Referring now to Figure 1 there is shown the top plan view of a microbridge infrared radiation detector element 10. Figure 2 is an edge view or sectional view of Figure 1 and carries like identifying numerals. The sensing element is made up of a sensing area identified by dashed lines. The sensing area or radiation sensing means could be a thin film sinuous nickel-iron resistor element or an area of deposited thin film of some other temperature-sensitive electrically resistive material. In these figures can be seen a completed detector element structure. The substrate 11 is single crystalline (100) silicon having a planar surface 11a upon which has been sputter deposited a thin film layer 12, 13 of a dielectric such as silicon nitride. The thin film layer may be on the order of a µm in thickness and may have about half of the layer deposited first, then a thin film resistive layer 14, such as NiFe, is sputtered on and delineated, followed by the depositing of the remainder 13 of the nitride layer to embed the resistive layer. The thickness of the NiFe layer 14 is about 8×10⁻⁸ (800 angstroms). The delineating of the resistive layer 14 is to provide a sinuous (see Figure 5) or tortuous resistive path 14' through the sensing area 17 starting at an entrance point 22 and continuing to an exit point 23. The sinuous path shown in the sensing area 17 is exemplary for obtaining a desired resistance value and is not a part of the invention.

The radiation sensing means has a pair of elongated support legs including leadout means which provide the electrical connections to and from the radiation sensing means. The leadout means are fabricated on a pair of silicon nitride leadout areas between two etch window cuts in the silicon nitride and semienclose the sensing means. The window cuts in the silicon nitride are areas defined for providing access to introduce anisotropic etchant for anisotropically etching a pit beneath the sensing area. The L-shaped support leg 20 is connected to the bridge member 17 at tab 30 and to the substrate at the opposite end 31. Likewise, the L-shaped support leg 21 is connected in supporting relation to the bridge member 17 at tab 32 and to the substrate at the opposite end 33. An enlarged cross sectional view of the completed L-shaped support legs 20 and 21 is shown in Figure la and comprises the NiFe conductor 35 (i.e., layer 14) on the nitride strip 36 (i.e., layer 12). Exemplary dimensions of the support legs are shown in Figure 1a with a width of 1.5 µm, a nitride thickness of 1×10⁻⁷ m(.10 micron) and a 4·10⁻⁸ m (.04 micron) metal thickness. Since the leg 20 (or 21) extends around two adjacent sides of the perimeter of the microbridge, the length of the L-shaped support leg is on the order of 6×10⁻⁴ m (600 microns). In the plan view of Figure 1, the L-shaped legs 20 and 21 are bordered by a pair of interlocking cuts 40 and 50 through the silicon nitride layer 12, 13. At an earlier step in the fabrication, to be explained below, these silicon nitride cuts are six sections in number and sections are separated by leg supporting tabs.

Referring now to Figure 3 (which is in many ways similar to Figure 1) there is shown the top plan view at an intermediate point in the process of fabricating the sensor structure and before all the steps are completed that result in the final device. In Figure 3 one set of the silicon nitride cuts 41, 42, 43 and 44 is shown which in the final device is numbered 40. Another set of silicon nitride cuts 51, 52, 53 and 54 is shown which in the final device is numbered 50. Between adjacent ends of cuts 41 and 42 is a tab 45; adjacent ends of cuts 42 and 43 is a tab 46, and between adjacent ends of cuts 53 and 54 is a tab 55; between adjacent ends of cuts 52 and 53 is a tab 56; and between adjacent ends of cuts 53 and 54 is a tab 57. The six tabs are positioned along the length of the legs to stabilize and protect the legs and main detector area until the turbulent liquid etch process is completed. Without the protection of the tabs there would be the possibility of a collapse of the detector into the etch pit which could occur because of surface tension effects. The six tabs are to be removed in final stages of fabrication.

Figure 4a is a cross section view taken at line 4a 4a of Figure 3. In this figure the layer structure is predominantly the same as explained in Figure 2. In this intermediate stage an additional thin film chromium photolithographic metal mask 60 is shown which has been deposited and delineated over the structure to protect it while a dry etch step thins the uncoated Si₃N₄ of the legs 20' and 21' and their six support tabs. Figure 6a shows a short section of the leg 20' (or 21') prior to the dry etch. At that point the legs are about 3.5µm wide and about 0.3µm in thickness. Following the dry etch step which removes about half of the silicon nitride the structure appears as shown in Figure 6B. The six thinned support tabs are still intact, Figure 3, to support the legs and sensor structure during the anisotropic etch. In Figure 4a is shown the thinned legs 20' and 21' as well as tab 45 as also shown is the etched pit following the anisotropic etch. In Figure 3 the hatched area is added to represent the plan view location of the temporary chrome mask 50. In Figure 4b is shown a section from the other direction. In Figure 4b there is shown the thinned leg 21' and the thinned tab 47. Slots 43 and 52 are shown.

After the pit has been etched anisotropically the turbulent etch procedures are completed. The protective chrome 60 has now served its purpose and is removed with a final liquid etch. Referring now to the legs shown in Figure 6c as compared with Figure 6b, a final plasma etch removes the remaining silicon nitride 70 over the metal conductor and also the silicon nitride areas 71, 72, 73 and 74 and the six tabs. The silicon nitride 75 under the metal conductor is protected by the metal and remains as shown in Figure 6c. As the Si₃N₄ is etched away to release the tabs there is a bimorph affect of the remaining portion of the legs to tend to raise the main detector 17 and keep it above the substrate preserving the thermal isolation under the detector.

Referring again to Figure 1 there is shown a sensing area 17. The NiFe sensor is shown at layer 14 of Figure 2. Figure 5 shows in more detail how the embedded sensor 14 layout and electrode leadout would preferably be designed.

### Summary of Main Process Steps

1. Provide monocrystalline silicon wafer substrate.
2. Deposit Si₃N₄ layer.
3. Deposit and delineate NiFe sensor and leads.
4. Deposit Si₃N₄ layer to embed NiFe in the Si₃N₄.
5. Deposit absorber layer of NiFe.
6. Cover absorber layer with 30-40 nm Si₃N₄.
7. Cover surface with chrome metal mask and delineate chrome.
8. Make six Si₃N₄ etch cuts.
9. Thin legs and support tabs to 1/2 thickness by dry etch.
10. Anisotropically etch the pit in Si.
11. Remove chrome with final liquid etch.
12. Perform final plasma dry etch to thin and narrow legs and remove support tabs by removing Si₃N₄.

## Claims

1. A process for fabricating a thermal isolation microbridge used as an infrared radiation detection element, the steps comprising:
providing a monocrystalline silicon substrate wafer (11) having a planar surface;
depositing a thin film silicon nitride layer (12) on said surface;
depositing and delineating a thin film layer (14) of temperature-sensitive, electrically-resistive material for a sensor and electrode leadout on said silicon nitride layer;
depositing a further thin film silicon nitride layer (13) over said material and said silicon nitride layer;
depositing a thin absorber layer (16) over the last deposited silicon nitride in the area of the sensor;
depositing and delineating a thin film photo-lithographic mask (60),
making a plurality of silicon nitride cuts (40, 50) outlining elongated legs (20, 21) containing the electrode leadout and the support tabs for the microbridge;
dry etching the legs and the support tabs to remove about 1/2 the thickness of silicon nitride;
introducing anisotropic etchant through said cuts and anisotropically etching away silicon to form a pit beneath the microbridge sensor legs;
removing the thin film photolithographic mask with a liquid etch;
etching with a plasma dry etch the exposed silicon nitride on said elongated legs to remove the Si₃N₄ of the leg extending laterally of the electrode so as to remove the support tabs.

2. A process according to Claim 1 and directly following said step "depositing a thin absorber layer over the last deposited silicon nitride in the area of the sensor", further comprising the step:
covering said absorber layer with a thin film layer of silicon nitride.

3. A process according to Claim 1 or 2 in which said temperature sensitive electrically-resistive material is nickel-iron.

4. A process according to any preceding Claim in which said absorber layer is a thin film layer of nickel-iron.

5. A process according to any preceding Claim in which said photolithographic mask is chrome metal.

6. A process according to any preceding Claim comprising etching with a plasma dry etch the exposed silicon nitride on said elongated legs to remove the Si₃N₄ down to the NiFe leadout, which NiFe acts as an etch stop to the dry etch, the plasma dry etch also removing the Si3N4 of the leg extending laterally of the electrode.

## Patentansprüche

1. Verfahren zur Herstellung einer thermisch isolierten Mikrobrücke als ein Infrarot-Strahlungs-Detektorelement, umfassend die Schritte:
Vorgabe eines monokristallinen Silicium-Substratwafers (11) mit einer ebenen Oberfläche;
Ablagerung einer Dünnfilm-Siliciumnitridschicht (12) auf der Oberfläche;
Ablagerung und Festlegung einer Dünnfilmschicht (14) aus temperaturempfindlichem elektrisch leitfähigem Material für einen Sensor und einer Elektrodenherausführung auf der Siliciumnitridschicht;
Ablagerung einer weiteren Dünnfilm-Siliciumnitridschicht (13) über dem Material und der Siliciumnitridschicht;
Ablagerung einer dünnen Absorbierschicht (16) über der zuletzt abgelagerten Siliciumnitridschicht im Bereich des Sensors;
Ablagerung und Festlegung einer photolithographischen Dünnfilmmaske (60);
Herstellung mehrerer Siliciumnitrideinschnitte (40,50) zur Festlegung länglicher Beine (20,21), die die Elektrodenherausführung und die Stützzungen für die Mikrobrücke enthalten;
Trockenätzen der Beine und der Stützzungen, um etwa die halbe Dicke des Siliciumnitrids zu entfernen;
Einführung eines anisotropischen Ätzmittels durch die Einschnitte und anisotropisches Wegätzen von Silicium, um eine Grube unterhalb der Mikrobrücken-Sensorbeine zu bilden;
Entfernung der photolithographischen Dünnfilmmaske mit einem flüssigen Ätzmittel;
Ätzen mit einer Plasma-Trockenätzung des freiliegenden Siliciumnitrids auf den länglichen Beinen, um das Si₃N₄ des Beines zu entfernen, das sich seitlich von der Elektrode erstreckt, um die Stützzungen zu entfernen.

2. Verfahren nach Anspruch 1 und direkt folgend auf den Schritt "Ablagerung einer dünnen Absorbierschicht (16) über der zuletzt abgelagerten Siliciumnitridschicht im Bereich des Sensors" ferner umfassend den Schritt:
Abdeckung der Absorbierschicht mit einer Dünnfilmschicht aus Siliciumnitrid.

3. Verfahren nach Anspruch 1 oder 2, bei welchem das temperaturempfindliche elektrisch leitfähige Material Nickel/Eisen ist.

4. Verfahren nach irgendeinem vorhergehenden Anspruch, bei dem die Absorbierschicht eine Dünnfilmschicht aus Nickel/Eisen ist.

5. Verfahren nach irgendeinem vorhergehenden Anspruch, bei welchem die photolithographische Maske aus Chrommetall besteht.

6. Verfahren nach irgendeinem vorhergehenden Anspruch, umfassend das Ätzen mit einer Plasma-Trockenätzung des freiliegenden Siliciumnitrids auf den länglichen Beinen, um das Si₃N₄ herunter bis zu der NiFe-Herausführung zu entfernen, welches NiFe als ein Ätzstop für die Trockenätzung wirkt, wobei die Plasma-Trockenätzung ebenfalls das Si₃N₄ entfernt, das sich seitlich von der Elektrode erstreckt.

## Revendications

1. Procédé de fabrication d'un micropont d'isolation thermique utilisé comme élément détecteur de rayons infrarouges, ledit procédé comprenant les étapes suivantes :
on prévoit une tranche de substrat de silicium monocristallin (11) ayant une surface plane,
on dépose une mince couche de nitrure de silicium en film (12) sur ladite surface,
on dépose et on délimite une mince couche en film (14) d'un matériau sensible à la température et résistant à l'électricité pour une sortie de détecteur et d'électrode sur ladite couche de nitrure de silicium,
on dépose une autre couche mince en film de nitrure de silicium (13) sur ledit matériau et sur ladite couche de nitrure de silicium,
on dépose une mince couche d'absorbeur (16) sur la dernière couche de nitrure de silicium déposée dans la zone du détecteur,
on dépose et on délimite un masque photolithographique en film mince (60),
on réalise une série de découpes (40, 50) dans le nitrure de silicium pour définir des branches allongées (20, 21) contenant la sortie de l'électrode et les pattes de support du micropont,
on grave à sec les branches et les pattes de support pour éliminer environ la moitié de l'épaisseur du nitrure de silicium,
on introduit un agent de gravure anisotrope à travers lesdites découpes et on élimine par gravure anisotrope le silicium pour former un puits en dessous des branches du détecteur du micropont,
on élimine le masque photolithographique en film mince par un agent de gravure liquide,
on grave avec un agent de gravure sec au plasma le nitrure de silicium exposé sur lesdites branches allongées pour éliminer le Si₃N₄ de la branche s'étendant latéralement vis-à-vis de l'électrode afin d'éliminer les pattes de support.

2. Procédé selon la revendication 1, suivant directement ladite étape de "dépôt d'une mince couche d'absorbeur sur le nitrure de silicium qui a été déposé en dernier lieu dans la zone du détecteur", comprenant en outre l'étape :
de recouvrement de ladite couche d'absorbeur par une mince couche en film de nitrure de silicium.

3. Procédé selon la revendication 1 ou 2, dans lequel ledit matériau résistant à l'électricité, sensible à la température est formé de nickel-fer.

4. Procédé selon l'une quelconque des revendications précédentes, dans lequel ladite couche d'absorbeur est une mince couche en film de nickel-fer.

5. Procédé selon l'une quelconque des revendications précédentes, dans lequel ledit masque photolithographique est formé de chrome.

6. Procédé selon l'une quelconque des revendications précédentes, consistant à graver à l'aide d'un agent de gravure à sec au plasma le nitrure de silicium exposé sur lesdites branches allongées pour éliminer le Si₃N₄ jusqu'à la sortie de NiFe, ledit NiFe jouant le rôle d'arrêt de gravure vis-à-vis de l'agent de gravure sec, la gravure à sec au plasma éliminant également le Si₃N₄ de la branche s'étendant latéralement de l'électrode.
